# EUROPÄISCHE PATENTSCHRIFT

(11) **EP 3 942 851 B1**
(45) Veröffentlichungstag und Bekanntmachung des Hinweises auf die Patenterteilung: **10.05.2023**
(21) Anmeldenummer: 20727195.8
(22) Anmeldetag: 15.05.2020
(51) Int. Cl.: H04W 4/40, H04W 4/44, H04W 4/46, H04W 12/06, H04L 67/568, G08G 1/01, G08G 1/0967, H04W 4/02, H04W 4/029, G08G 1/09, G08G 1/0962

(54) **KOMMUNIKATIONSSYSTEM MIT EINEM KOMMUNIKATIONSADAPTER UND EINER KOORDINIERUNGSEINRICHTUNG SOWIE KOMMUNIKATIONSADAPTER, KOORDINIERUNGSEINRICHTUNG UND VERFAHREN ZUM DURCHFÜHREN EINER KOMMUNIKATION**
COMMUNICATION SYSTEM WITH A COMMUNICATION ADAPTER AND A COORDINATING DEVICE AND COMMUNICATION ADAPTER, COORDINATING DEVICE AND METHOD FOR CARRYING OUT A COMMUNICATION
SYSTÈME DE COMMUNICATION AVEC UN ADAPTATEUR DE COMMUNICATION ET UN DISPOSITIF DE COORDINATION ET ADAPTATEUR DE COMMUNICATION, DISPOSITIF DE COORDINATION ET PROCÉDÉ POUR EFFECTUER UNE COMMUNICATION

(30) Priorität: 11.06.2019 DE 102019208424
(43) Veröffentlichungstag der Anmeldung: 26.01.2022
(73) Patentinhaber: Audi AG, 85045 Ingolstadt (DE)
(72) Erfinder: OTTO, Moritz, 74219 Möckmühl (DE)
(86) Internationale Anmeldenummer: PCT/EP2020/063567
(87) Internationale Veröffentlichungsnummer: WO 2020/249357

(56) Entgegenhaltungen:
- US-A1- 2017 048 080
- US-A1- 2019 068 712
- Anonymous: "Head Up Display User Manual", , 1. Oktober 2016 (2016-10-01), Seiten 1-11, XP055724332, ShenZhen, 518109 China Gefunden im Internet: URL:http://www.vjoychina.com/wp-content/up loads/2016/09/W02-OBD-Hud-USER-MANUAL.pdf [gefunden am 2020-08-21]

## Beschreibung

Die Erfindung betrifft einen Kommunikationsadapter und ein Kommunikationssystem mit einem Kraftfahrzeug, einem solchen Kommunikationsadapter und einer Koordinierungseinrichtung. Der Kommunikationsadapter ist als ein mittels einer Kommunikationsschnittstelle mit einer Steuereinrichtung des Kraftfahrzeugs reversibel koppelbarer, fahrzeugfremder, portabler Kommunikationsadapter ausgestaltet. Der Kommunikationsadapter ist bevorzugt als ein Smartphone, ein Tablet-PC oder ein vergleichbares mobiles Endgerät realisiert. Die Koordinierungseinrichtung ist als eine fahrzeugexterne Koordinierungseinrichtung, insbesondere als eine zentrale Servereinrichtung, ausgebildet.

Im Rahmen der Entwicklung von autonomen Kraftfahrzeugen und vernetzten Verkehrssystemen, insbesondere vernetzten Verkehrsleitsystemen, kommt der Kommunikation zwischen einzelnen Verkehrsteilnehmern, insbesondere zwischen einzelnen zumindest teilweise autonomen Kraftfahrzeugen, eine große Bedeutung zu. Dementsprechend existiert eine Vielzahl bekannter Verfahren zum Informationsaustausch zwischen Verkehrsteilnehmern.

So beschreibt beispielsweise die DE 10 2017 009 722 A1 ein Verfahren zur drahtlosen Informationsübermittlung zwischen zwei Fahrzeugen, wobei diese sich innerhalb eines vorbestimmten Abstands oder Radius' zueinander befinden. Die Informationsübermittlung findet hierbei zwischen Kommunikationseinheiten statt, wobei eine jeweilige Kommunikationseinheit in Form eines Smartphones ausgebildet sein kann. Diese geschilderte Car-to-Car-Kommunikation umfasst in nachteiliger Weise nur solche Verkehrsteilnehmer, die sich innerhalb einer vorbestimmten, maximalen Distanz zueinander befinden.

Die DE 10 2017 200 842 A1 beschreibt ein Verfahren zum Betrieb einer Verkehrsleitinfrastruktur zum Bestimmen einer Solltrajektorie für zumindest ein Kraftfahrzeug. Die Solltrajektorie wird hierbei mittels einer zentralen Servereinrichtung in Abhängigkeit von einer Umgebung des Kraftfahrzeugs bestimmt. In nachteiliger Weise können nur solche Kraftfahrzeuge und/oder solche weiteren Verkehrsteilnehmer an dem hier geschilderten Verfahren teilnehmen, welche über eine entsprechend ausgebildete Kommunikationsschnittstelle verfügen.

Die DE 10 2007 006 227 A1 beschreibt ihrerseits ein Frühwarnsystem zur präventiven Erkennung und Korrektur von Mängeln in Fahrzeugen. Hierzu findet eine Datenübertragung zwischen einem jeweiligen Fahrzeug und einem Zentralrechner statt, welcher die übertragenen Daten automatisch auswertet und bei Überschreitung vorprogrammierter Grenzwerte eine Alarmmeldung an eine technische Zentrale weiterleitet. Eine Kommunikation zwischen den einzelnen Verkehrsteilnehmern oder Fahrzeugen ist nicht vorgesehen.

Die US 2019/068712 A1 beschreibt ein Kommunikationsmittel, das mit einem Fahrzeug verbunden werden kann, um ein elektrisches System des Fahrzeugs an einen V2X (vehicle-to-x) Datenstrom anzukoppeln.

Die US 2017/048080 A1 beschreibt eine plug-in Kommunikationsvorrichtung für ein Kraftfahrzeug, die mittels einer On-Board Diagnoseschnittstelle (OBD port) elektrisch mit dem Kraftfahrzeug verbunden warden kann.

Die Publikation Anonymous: "Head Up Display User Manual" (Seiten 1 bis 11, XP055724332, ShenZhen, 518109 China) beschreibt den Anschluss eines Head-Up Displays an ein Kraftfahrzeugsystem mittels einer On-Board Diagnoseschnittstelle (OBD port).

Nachteilig bei dem Bekannten ist es, dass jeweils nur ein beschränkter Kreis an jeweiligen Verkehrsteilnehmern und/oder Fahrzeugen an einem funkbasierten Datenaustausch von Kraftfahrzeugdaten teilnehmen kann. Diese nachteilige Beschränkung entsteht zum einen dadurch, dass nur Fahrzeuge, die sich in einem vorbestimmten Abstand zueinander befinden, miteinander kommunizieren können. Zum anderen besteht diese Beschränkung darin, dass an einer jeweiligen Kommunikation Beteiligte über gleiche technische Grundvoraussetzungen zur Kommunikation verfügen müssen.

Der Erfindung liegt die Aufgabe zugrunde, eine Kommunikation zwischen Kraftfahrzeugen mit uneinheitlichen oder unterschiedlichen technischen Kommunikationsmitteln oder Grundvoraussetzungen zur Kommunikation zu ermöglichen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Kommunikationsadapter für ein Kommunikationssystem bereitgestellt. Das Kommunikationssystem umfasst ein Kraftfahrzeug, den mittels einer Kommunikationsschnittstelle mit einer Steuereinrichtung des Kraftfahrzeugs reversibel koppelbaren, fahrzeugfremden, portablen Kommunikationsadapter und eine fahrzeugexterne Koordinierungseinrichtung. Wie oben beschrieben, kann der Kommunikationsadapter als ein mobiles Endgerät, insbesondere als ein Smartphone oder ein Tablet-PC, ausgestaltet sein. Es ist vorgesehen, dass der Kommunikationsadapter mit einer Steuereinrichtung des Kraftfahrzeugs reversibel koppelbar ist. Eine solche reversible Kopplung kann beispielsweise über eine kabelgebundene Steckverbindung zwischen Kommunikationsadapter und On-Board-Diagnoseeinheit (OBD-Einheit) des Kraftfahrzeugs erfolgen. Diese Verbindung kann auch drahtlos erfolgen, beispielsweise über eine Bluetooth- oder eine Funkverbindung (beispielsweise WLAN - Wireless local area network). Der Kommunikationsadapter ist derart ausgestaltet, dass er ohne weitere technische Maßnahmen von einem Fahrzeuginsassen, insbesondere von einem Fahrzeugführer, mit der Steuereinrichtung des Kraftfahrzeugs verbunden und wieder von dieser (zerstörungsfrei) getrennt werden kann. Die Steuereinrichtung kann auf einem Steuergerät oder einem Verbund aus mehreren Steuergeräten des Kraftfahrzeugs beruhen.

Erfindungsgemäß ist der Kommunikationsadapter dazu eingerichtet, von der Steuereinrichtung des Kraftfahrzeugs Kraftfahrzeugdaten zu empfangen, welche ein Verkehrsverhalten und/oder eine Verkehrsumgebung des Kraftfahrzeugs beschreiben. Hierzu kann es vorgesehen sein, dass eine entsprechend ausgebildete Software oder Applikation (App) auf einem dazu ausgelegten Speichermedium des Kommunikationsadapters installiert ist.

Erfindungsgemäß weist der Kommunikationsadapter weiterhin eine Sende-Empfangseinheit auf, mittels der er die Kraftfahrzeugdaten an die fahrzeugexterne Koordinierungseinrichtung übermittelt. Die Sende-Empfangseinheit kann beispielsweise als ein Mobilfunkmodul und/oder ein WLAN-Funkmodul (WLAN - wireless local area network) realisiert sein. Mit anderen Worten kann der Kommunikationsadapter unter Verwendung der Sende-Empfangseinheit eine Datenverbindung für eine Datenübermittlung an die fahrzeugexterne Koordinierungseinrichtung betreiben. Die so übermittelten Kraftfahrzeugdaten umfassen beispielsweise Daten eines Lenkradwinkelsensors und/oder Blinkers und/oder Bremspedalsensors und/oder Fahrpedalsensors und/oder in einem Navigationsgerät des Kraftfahrzeugs gespeicherte Routeninformationen. Darüber hinaus können die Kraftfahrzeugdaten Informationen bezüglich einer Fahrgeschwindigkeit und/oder einer Beschleunigung des Kraftfahrzeugs umfassen. Die Kraftfahrzeugdaten können auch Umgebungsdaten des Kraftfahrzeugs umfassen, insbesondere durch eine Kamera des Kraftfahrzeugs aufgezeichnete, optische Umgebungsdaten.

Der Kommunikationsadapter ist weiterhin dazu ausgebildet, mittels der Sende-Empfangseinheit von der fahrzeugexternen Koordinierungseinrichtung erzeugte Warndaten zu empfangen, welche ein Verkehrsverhalten und/oder eine Verkehrsumgebung zumindest eines anderen Kraftfahrzeugs beschreiben. Die Warndaten beschreiben beispielsweise das Herannahen eines anderen Kraftfahrzeugs mit einer Geschwindigkeit, die oberhalb eines vorbestimmten Schwellenwerts liegt. Die Warndaten können aber auch Informationen bezüglich einer Verkehrsumgebung, insbesondere bezüglich eines Verkehrsaufkommens in der Umgebung des anderen Kraftfahrzeugs, umfassen.

Mit anderen Worten kann der Kommunikationsadapter unter Verwendung der Sende-Empfangseinheit einen beidseitigen Datenaustausch oder einen Zwei-Wege-Datenaustausch mit der Koordinierungseinrichtung und/oder unter Verwendung der Koordinierungseinrichtung indirekt zu zumindest einem anderen Kraftfahrzeug betreiben.

Erfindungsgemäß ist der Kommunikationsadapter nun dazu ausgebildet, auf Grundlage der Warndaten zumindest eine verkehrskoordinierende Maßnahme auszulösen. Eine solche Maßnahme besteht erfindungsgemäß in einer Ausgabe eines Warnhinweises an einen Kraftfahrzeugführer.

Die Erfindung sieht vor, dass der Kommunikationsadapter dazu ausgelegt ist, die Kraftfahrzeugdaten zunächst in einen vorbestimmten Zwischenspeicher zu schreiben und mittels der Sende-Empfangseinheit in Abhängigkeit von einem Vorliegen eines erfüllten Freigabekriteriums an die fahrzeugexterne Koordinierungseinrichtung zu übermitteln. Mit anderen Worten übermittelt der Kommunikationsadapter die Kraftfahrzeugdaten nicht unmittelbar an die Koordinierungseinrichtung, sondern speichert diese zunächst in einem Zwischenspeicher ab. Ein solcher Zwischenspeicher kann beispielsweise als ein internetbasierter Cloud-Speicher realisiert sein. Die so zwischengespeicherten Kraftfahrzeugdaten werden erfindungsgemäß erst bei Vorliegen eines erfüllten Freigabekriteriums an die fahrzeugexterne Koordinierungseinrichtung übermittelt.

Mit anderen Worten findet keine Übermittlung statt, wenn das Freigabekriterium nicht erfüllt ist. Ein solches Freigabekriterium besteht in einer erfolgreichen Authentifizierung und/oder einem erfolgreichen Identitätsnachweis eines die Kraftfahrzeugdaten anfragenden anderen Kraftfahrzeugs.

Durch die Erfindung ergibt sich der Vorteil, dass mittels des erfindungsgemäßen Kommunikationsadapters Kraftfahrzeuge, die nicht über von Anfang an irreversibel verbaute entsprechende technische Voraussetzungen verfügen in eine Kommunikation zwischen weiteren Verkehrsteilnehmern eingebunden werden können. Zudem kann der Kommunikationsadapter aufgrund seiner Portabilität nacheinander oder abwechselnd in mehr als einem Kraftfahrzeug verwendet werden. Durch die erfindungsgemäße Zwischenspeicherung der Kraftfahrzeugdaten und deren Freigabe erst bei Vorliegen des erfüllten Freigabekriteriums ergibt sich der Vorteil, dass die Kraftfahrzeugdaten in einem geschützten Bereich zwischengespeichert werden. Ein Missbrauch der Kraftfahrzeugdaten lässt sich so vorteilhaft vermeiden.

Zu der Erfindung gehören auch Ausführungsformen, durch die sich zusätzliche Vorteile ergeben.

Im Sinne des Datenschutzes kann es beispielsweise vorgesehen sein, dass auch die Übermittlung der Kraftfahrzeugdaten von der Steuereinrichtung des Kraftfahrzeugs an den Kommunikationsadapter erst dann ausgelöst wird, wenn eine kraftfahrzeugseitig zu erfolgende Zugriffserlaubnis erteilt wurde.

Eine weitere Ausführungsform sieht vor, dass der Kommunikationsadapter dazu ausgebildet ist, mittels einer in dem Kommunikationsadapter verbauten Empfangseinheit für ein Positionssignal eines globalen Navigationssatellitensystems (GNSS) Eigenpositionsdaten betreffend seine aktuelle Position zu ermitteln und mittels der Sende-Empfangseinheit an die fahrzeugexterne Koordinierungseinrichtung zu übermitteln. Bei einem als mobiles Endgerät, insbesondere als Smartphone, ausgebildeten Kommunikationsadapter kann eine solche Empfangseinheit durch einen GPS-Empfänger (GPS - Global Positioning System) realisiert sein. Hierdurch ergibt sich der Vorteil, dass zusätzlich zu den genannten Kraftfahrzeugdaten auch Positionsdaten und/oder Beschleunigungsdaten des Kommunikationsadapters selbst an die fahrzeugexterne Koordinierungseinrichtung übermittelt werden können. Diese Eigenpositionsdaten und/oder Beschleunigungsdaten des Kommunikationsadapters selbst bilden eine sinnvolle Ergänzung zu den beschriebenen Kraftfahrzeugdaten.

Die fahrzeugexterne Koordinierungseinrichtung für ein Kommunikationssystem ist nicht Bestandteil der vorliegenden Erfindung. Die fahrzeugexterne Koordinierungseinrichtung ist dazu ausgebildet, als Eingangsdaten aus zumindest einem Kommunikationsadapter Kraftfahrzeugdaten eines jeweiligen ein Altfahrzeug darstellenden Kraftfahrzeugs und/oder Eigenpositionsdaten des zumindest einen Kommunikationsadapters zu empfangen. Ein Altfahrzeug ist im Zusammenhang mit der Erfindung ein Kraftfahrzeug, dessen fest installierte technische Ausstattung keinen eigenen Datenaustausch mit der Koordinierungseinrichtung und/oder einem autonomen Kraftfahrzeug bereitstellt. Ein Altfahrzeug ist insbesondere ein Kraftfahrzeug ohne autonome Fahrfunktion. Die Koordinierungseinrichtung ist weiterhin dazu ausgebildet, zusätzlich aus weiteren, insbesondere autonomen, Kraftfahrzeugen jeweilige Kraftfahrzeugdaten und/oder jeweilige Fahrzeugpositionsdaten zu empfangen. Die Koordinierungseinrichtung kann beispielsweise als ein zentraler Internetserver oder als ein Cloudserver ausgebildet sein. Die Koordinierungseinrichtung kann allerdings auch als eine Recheneinheit eines autonomen Kraftahrzeugs realisiert sein, welche in der Art eines Autopiloten ein Fahrverhalten des autonomen Kraftfahrzeugs steuert.

Die Koordinierungseinrichtung ist dazu ausgebildet, basierend auf den Eingangsdaten eine jeweilige bevorstehende Verkehrssituation für das jeweilige Kraftfahrzeug beschreibende Warndaten zu erzeugen und die Warndaten an den zumindest einen Kommunikationsadapter und/oder an zumindest eines der Kraftfahrzeuge auszusenden.

Darüber hinaus gehört zu der Erfindung ein Kommunikationssystem mit einem Kommunikationsadapter gemäß Anspruch 1, der dazu ausgebildet ist, mittels einer Luftschnittstelle eine Kommunikationsverbindung zu zumindest einem weiteren, insbesondere autonomen, Kraftfahrzeug und/oder zu einer fahrzeugexternen Koordinierungseinrichtung des Kommunikationssystems herzustellen, Warndaten zu empfangen und auf Grundlage der Warndaten zumindest eine verkehrskoordinierende Maßnahme auszulösen. Wie oben beschrieben, kann der Kommunikationsadapter als ein mobiles Endgerät, insbesondere als ein Smartphone oder als ein Tablet-PC, ausgebildet sein. Die Luftschnittstelle kann beispielsweise als eine Funkschnittstelle ausgebildet sein, also als eine kabellose Schnittstelle. Mittels der Luftschnittstelle kann insbesondere eine Datenübertragung per Funkwellen oder Infrarotwellen stattfinden.

Gemäß einer bevorzugten Ausführungsform weist der Kommunikationsadapter eine Anzeigefläche zum optischen Anzeigen der durch die fahrzeugexterne Koordinierungseinrichtung übermittelten Warndaten auf. Die Anzeigefläche kann beispielsweise durch eine pixelbasierte Bildschirmeinrichtung realisiert sein. Gemäß der hier geschilderten Ausführungsform ist eine optische Anzeige von übermittelten Warndaten als verkehrskoordinierende Maßnahme vorgesehen. Dies kann beispielsweise durch ein Blinken und/oder ein Aufleuchten und/oder das Anzeigen eines Warnsymbols auf der Anzeigefläche realisiert sein.

Alternativ oder zusätzlich kann es vorgesehen sein, dass der Kommunikationsadapter eine akustische Ausgabeschnittstelle zum Aussenden von mit den Warndaten korrespondierenden akustischen Warnsignalen als verkehrskoordinierende Maßnahme aufweist.

Es kann auch vorgesehen sein, dass fahrzeuginterne Medienausgabegeräte, beispielsweise ein im Kraftfahrzeug verbautes Radio und/oder ein im Kraftfahrzeug verbauter Bildschirm, als die Ausgabe jeweiliger akustischer und/oder optischer Warnsignale realisierende Einrichtungen genutzt werden.

Es kann beispielsweise auch vorgesehen sein, dass eine haptische Rückmeldung als Ausgabe jeweiliger Warndaten an einen Fahrzeuginsassen erfolgt. Dies kann beispielsweise durch ein Vibrieren des Lenkrads erfolgen.

Gemäß einer weiteren bevorzugten Ausführungsform weist der Kommunikationsadapter eine Ladeschnittstelle zum elektrischen Anbinden an ein Bordspannungsnetz des Kraftfahrzeugs zum elektrischen Aufladen eines elektrischen Speichers des Kommunikationsadapters auf. Hierdurch ergibt sich der Vorteil, dass der Kommunikationsadapter im Betrieb mit elektrischer Energie versorgt werden kann.

Die Erfindung betrifft darüber hinaus ein Verfahren zum Durchführen einer Kommunikation in einem Kommunikationssystem mit einem Kraftfahrzeug, einem mittels einer Kommunikationsschnittstelle mit einer Steuereinrichtung des Kraftfahrzeugs reversibel koppelbaren, fahrzeugfremden, portablen Kommunikationsadapter und einer fahrzeugexternen Koordinierungseinrichtung gemäß Anspruch 7.

Das erfindungsgemäße Verfahren sieht vor, dass der Kommunikationsadapter von der Steuereinrichtung ein Verkehrsverhalten und/oder eine Verkehrsumgebung des Kraftfahrzeugs beschreibende Kraftfahrzeugdaten empfängt. Der Kommunikationsadapter übermittelt mittels einer Sende-Empfangseinheit einerseits die Kraftfahrzeugdaten an die fahrzeugexterne Koordinierungseinrichtung und empfängt andererseits von der fahrzeugexternen Koordinierungseinrichtung erzeugte, ein Verkehrsverhalten und/oder eine Verkehrsumgebung zumindest eines anderen Kraftfahrzeugs beschreibende Warndaten. Aufgrund der Warndaten löst der Kommunikationsadapter zumindest eine verkehrskoordinierende Maßnahme aus, wobei die verkehrskoordinierende Maßnahme in einer Ausgabe eines Warnhinweises an einen Kraftfahrzeugführer besteht.

Erfindungsgemäß schreibt der Kommunikationsadapter die Kraftfahrzeugdaten zunächst in einen vorbestimmten Zwischenspeicher und übermittelt diese mittels der Sende-Empfangseinheit in Abhängigkeit von einem Vorliegen eines erfüllten Freigabekriteriums an die fahrzeugexterne Koordinierungseinrichtung, wobei eine Übermittlung bei nicht erfülltem Freigabekriterium nicht stattfindet und wobei das Freigabekriterium in einer erfolgreichen Authentifizierung und/oder einem erfolgreichen Identitätsnachweis eines die Kraftfahrzeugdaten anfragenden anderen Kraftfahrzeugs besteht.

Darüber hinaus umfasst die Erfindung ein Speichermedium mit einem Programmcode, der dazu eingerichtet ist, bei Ausführen durch eine Prozessoreinrichtung eines mobilen Endgeräts ein erfindungsgemäßes Verfahren durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung den Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Das besagte Speichermedium kann ein Bestandteil des mobilen Endgeräts sein, also der Datenspeicher der Prozessoreinrichtung des Endgeräts, oder es kann sich um einen Datenspeicher eines Internetserver für Applikationssoftware handeln, also einem Verkaufsanbieter für sogenannte Apps.

Zu der Erfindung gehören auch Weiterbildungen des erfindungsgemäßen Kommunikationssystems, des erfindungsgemäßen Verfahrens zum Durchführen einer Kommunikation sowie des erfindungsgemäßen Speichermediums, die Merkmale aufweisen, wie sie bereits im Zusammenhang mit den Weiterbildungen des erfindungsgemäßen Kommunikationsadapters beschrieben worden sind. Aus diesem Grund sind die entsprechenden Weiterbildungen hier nicht noch einmal beschrieben.

Ein jeweiliges Kraftfahrzeug im Sinne der Erfindung ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigen
- Fig. 1: eine schematische Darstellung einer Ausführungsform des erfindungsgemäßen Kommunikationssystems;
- Fig. 2: eine schematische Darstellung einer weiteren Ausführungsform des erfindungsgemäßen Kommunikationssystems.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

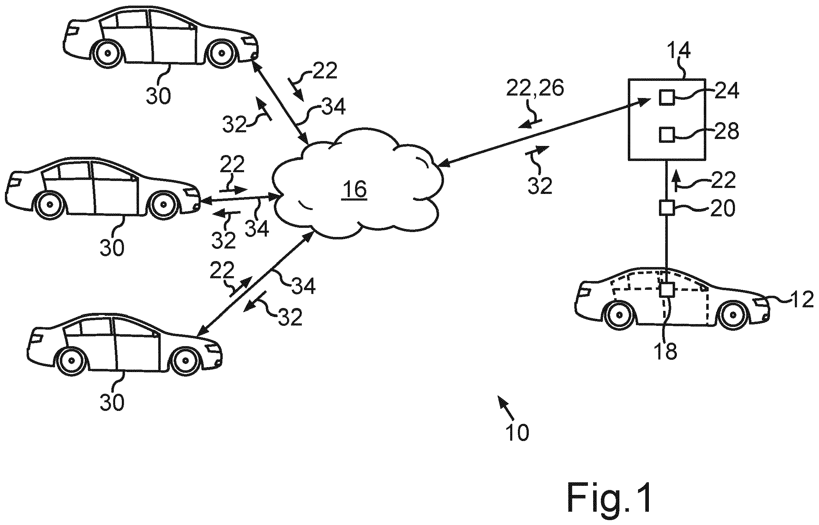

Fig. 1 zeigt eine Ausführungsform eines Kommunikationssystems 10 mit einem Kraftfahrzeug 12, einem Kommunikationsadapter 14 und einer Koordinierungseinrichtung 16. Das Kraftfahrzeug 12 kann ein nicht autonomes Kraftfahrzeug sein oder allgemein ein Altfahrzeug im oben angegebenen Sinne, d.h. es kann von sich aus die Koordinierungseinrichtung 16 nicht nutzen. Der Kommunikationsadapter 14 kann beispielsweise als ein mobiles Endgerät, insbesondere als ein Smartphone, ausgebildet sein. Die Koordinierungseinrichtung 16 kann in dem in Fig. 1 gezeigten Ausführungsbeispiel eine internetbasierte, zentrale Servereinrichtung sein.

Das Kraftfahrzeug 12 weist in der in Fig. 1 dargestellten Ausführungsform eine Steuereinrichtung 18 auf, welche mittels einer Kommunikationsschnittstelle 20 mit dem Kommunikationsadapter 14 gekoppelt ist. Die Kommunikationsschnittstelle 20 kann beispielsweise als eine Funkschnittstelle realisiert sein. Die Kommunikationsschnittstelle 20 kann auch als eine kabelgebundene Schnittstelle, insbesondere als ein USB-Port, realisiert sein.

Der Kommunikationsadapter 14 ist nun dazu ausgebildet, von der Steuereinrichtung 18 des Kraftfahrzeugs 12 Kraftfahrzeugdaten 22 zu empfangen. Wie oben beschrieben, können die Kraftfahrzeugdaten 22 beispielsweise Lenkradwinkelsensordaten und/oder Blinkerdaten und/oder Bremspedalsensordaten und/oder Fahrpedalsensordaten, sein. Die Kraftfahrzeugdaten 22 können auch Routeninformationen, welche beispielsweise in einem hier nicht dargestellten Navigationssystem des Kraftfahrzeugs 12 gespeichert sein können, umfassen. In jedem Fall beschreiben die Kraftfahrzeugdaten 22 ein aktuelles und/oder zukünftiges Verkehrsverhalten und/oder eine Verkehrsumgebung des Kraftfahrzeugs 12.

Wie in Fig. 1 gezeigt, weist der Kommunikationsadapter 14 eine Sende-Empfangseinheit 24 auf. Die Sende-Empfangseinheit 24 kann beispielsweise ein Mobilfunkmodul und/oder ein WLAN-Funkmodul sein. Mittels der Sende-Empfangseinheit 24 kann der Kommunikationsadapter 14 die Kraftfahrzeugdaten 22 an die fahrzeugexterne Koordinierungseinrichtung 16 übermitteln. Zusätzlich kann der Kommunikationsadapter 14 unter Verwendung der Sende-Empfangseinheit 24 Eigenpositionsdaten 26 betreffend seine aktuelle Position an die fahrzeugexterne Koordinierungseinrichtung 16 übermitteln. Zum Ermitteln seiner Eigenpositionsdaten 26 weist der Kommunikationsadapter 14 in der in Fig. 1 gezeigten Ausführungsform eine Empfangseinheit 28 für ein Positionssignal eines GNSS (GNSS - Globales Navigationssatellitensystem) auf.

Darüber hinaus dient die in Fig. 1 gezeigte Sende-Empfangseinheit 24 des Kommunikationsadapters 14 dazu, von der fahrzeugexternen Koordinierungseinrichtung 16 erzeugte, ein aktuelles und/oder zukünftiges Verkehrsverhalten und/oder eine Verkehrsumgebung zumindest eines anderen Kraftfahrzeugs 30 beschreibende Warndaten 32 zu empfangen. Dies setzt voraus, dass ein jedes der anderen Kraftfahrzeuge 30 eine jeweilige Kommunikationsverbindung 34 zu der Koordinierungseinrichtung 16 betreibt. Über eine jeweilige Kommunikationsverbindung 34 empfängt die Koordinierungseinrichtung 16 demnach jeweilige Kraftfahrzeugdaten 22 eines jeweiligen Kraftfahrzeugs 30 und sendet Warndaten 32 an die jeweiligen anderen Kraftfahrzeuge 30 aus. Mit anderen Worten sind die Kraftfahrzeuge 12, 30 über die Koordinierungseinrichtung 16 vernetzt.

Fig. 1 zeigt also eine Ausführungsform eines Kommunikationssystems 10, wobei eine Kommunikation zwischen den beteiligten Kraftfahrzeugen 12, 30 unter Einbindung der fahrzeugexternen Koordinierungseinrichtung 16 realisiert ist.

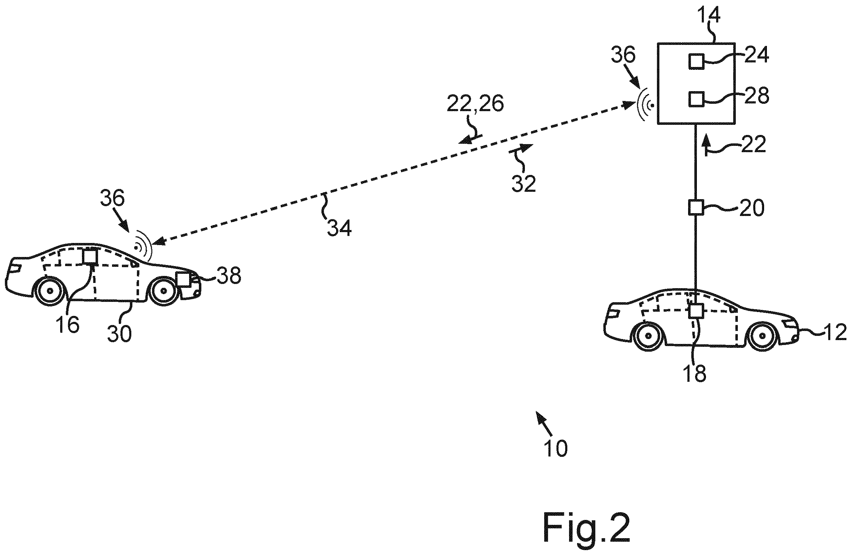

Fig. 2 zeigt nun unter Bezugnahme auf die im Zusammenhang in Fig. 1 beschriebenen Komponenten eine weitere Ausführungsform des Kommunikationssystems 10. In der in Fig. 2 gezeigten Ausführungsform ist die Koordinierungseinrichtung 16 als eine Autopiloteinrichtung des jeweiligen anderen, an der Kommunikation beteiligten Kraftfahrzeugs 30 realisiert. Mittels einer Luftschnittstelle 36 kommunizieren der Kommunikationsadapter 14 des Kraftfahrzeugs 12 und die Koordinierungseinrichtung 16 miteinander. Im Zuge dieser Kommunikation über die Kommunikationsverbindung 34 übermittelt der Kommunikationsadapter 14 jeweilige Kraftfahrzeugdaten 22 und/oder Eigenpositionsdaten 26 an die Koordinierungseinrichtung 16 und empfängt jeweilige Warndaten 32. Diese hier beschriebene Car-to-Car-Kommunikation kann in Form einer standardisierten Nachricht über die Luftschnittstelle 36 in einem definierten Mikrowellenbereich stattfinden. In vorteilhafter Weise weist das andere Kraftfahrzeug 30 zumindest eine Kamera 38 auf, mittels der das Kraftfahrzeug 12 identifiziert werden kann. Die vom Kommunikationsadapter 14 übermittelten Eigenpositionsdaten 26 können mit der Position, welche anhand eines Kamerabildes der Kamera 38 ermittelt wurde, abgeglichen werden.

Folgende Situationen können den Ausführungsbeispielen beispielhaft zu Grunde liegen.

Ein autonomes Kraftfahrzeug 30 erkennt ein Kraftfahrzeug 12, welches unerwartet nach rechts lenkt, um eine Ausfahrt zu bekommen. Bei entsprechender Gefahr wird das Kraftfahrzeug 30 bremsen, dies ist ein unangenehmes Erlebnis für den Insassen. Wenn nun das Kraftfahrzeug 30 die Möglichkeit hat, bei dem Kraftfahrzeug 12 über die Smartphone-Anbindung (also über die Kommunikationsverbindung 34 zwischen Koordinierungseinrichtung 16 und Kommunikationsadapter 14) in Echtzeit die zeitlich nächsten Routeninformation (z.B. die nächsten 200 m) abzufragen, kann es mit entsprechenden Manövern rechnen und diese im eigenen Fahrverhalten berücksichtigen. Auch eine starke Bremsung und ein Spurwechsel können von dem Kraftfahrzeug 12 an das Kraftfahrzeug 30 gesendet werden (in einem bestimmten Umkreis). Zwar werden die autonomen Systeme solche Fahrsituationen sicherlich erkennen, eine zusätzliche Informationsquelle durch das auslösende Kraftfahrzeug 12 würde aber zu einer höheren Laufzeitsicherheit beitragen.

In einer weiteren beispielhaften Situation will ein Kraftfahrzeug 30 aus einer beengten Seitenstraße auf eine Vorfahrtsstraße abbiegen. Ein Kraftfahrzeug 12 will in die beengte Seitenstraße fahren, wartet also und hält den Verkehr auf. Kraftfahrzeug 30 erkennt den aktiven Blinker und ggfs. sogar die Lichthupe von Kraftfahrzeug 12, aber nicht die Gestik des Fahrers. Kraftfahrzeug 30 wird aber trotzdem nicht fahren, da es nicht Vorfahrt hat. Die naheliegende Option wäre nun, den Fahrer übernehmen zu lassen. Alternativ lässt sich nun der Weg über die angebundene Kommunikation via Smartphone (also über die Kommunikationsverbindung 34 zwischen Koordinierungseinrichtung 16 und Kommunikationsadapter 14) beschreiten. Zunächst wird der Fahrer von Kraftfahrzeug 30 als zusätzlicher Beobachter aufmerksam gemacht. Nebenbei läuft die Abfrage bei Kraftfahrzeug 12 zu Route, Blinker und/oder Geschwindigkeit. Sollten die Informationen von der Abfrage, sowie die der Kamera 38 des Kraftfahrzeugs 30 übereinstimmen, wird der Fahrvorgang eingeleitet. Zur zusätzlichen Prozesssicherheit wird eine Nachricht an das Smartphone (also den Kommunikationsadapter 14) in Kraftfahrzeug 12 gesendet, welche dann einen Fahrvorgang ankündigt. Währenddessen überwacht Kraftfahrzeug 30, sowohl per Kamera 38 als auch über die Abfrage, die Lenk- und/oder Fahrtrichtung und Geschwindigkeit bei Kraftfahrzeug 12. Somit können die Kraftfahrzeuge 12, 30 ohne Eingreifen vollständig autonom solche Situationen meistern.

Ebenfalls interessant wird es, wenn die Sensordaten (also die Kraftfahrzeugdaten 22) in der Cloud (also der Koordinierungseinrichtung 16) auch weiterverarbeitet werden und dann als Informationen oder Warndaten 32 (Gefahrenhinweise, Unfälle) über den Verkehrsfunk verteilt werden. Dies ist ein etabliertes System, das durch die zusätzlichen Warnhinweise oder Warndaten 32 aktueller und somit sicherheitsfördernd arbeiten kann. Somit wirkt eine Anbindung an die Cloud (also die Koordinierungseinrichtung 16) über ein Smartphone (also einen Kommunikationsadapter 14) ergänzend und kann den Zugang zu im Gesamtverkehrsbild geringer eingestuften, aber für den Einzelnen dennoch wichtigen Informationen gewährleisten. Außerdem wäre eine Kommunikation direkter und besser möglich. So können gezielt vorprogrammierte Nachrichten genutzt werden um zwischen den Kraftfahrzeugen 12, 30 zu kommunizieren. Unabhängig davon, ob Kraftfahrzeug 30 autonom oder nicht gefahren wird, kann es eine Nachricht an ein anderes an die Kommunikation angebundenes Kraftfahrzeug 12 senden.

In einer weiteren beispielhaften Situation sucht Kraftfahrzeug 30 einen Parkplatz, der Fahrer erkennt, dass jemand in ein Kraftfahrzeug 12 einsteigt. Also deutet alles darauf hin, dass dieser Parkplatz frei wird. Statt mit Lichthupe, Gestik und sonstigen Kommunikationsmitteln, welche womöglich sowieso nicht gesehen werden, kann eine Nachricht an das Kraftfahrzeug 12 gesendet werden. Voraussetzung ist eine Anbindung über das Smartphone 14 oder ebenfalls ein Kraftfahrzeug 30 mit aktuellster Technik. Eine bereits eingespeicherte Nachricht wird also übermittelt, daraufhin muss das Kraftfahrzeug 30 aber auch stehen bleiben. Dies wird im autonomen Modus auch gemacht. Wenn der Mensch fährt, muss es zu mindestens unter entsprechender Sicherheitsfreigabe bewusst erlaubt werden. Für das Kraftfahrzeug 12 ist die Anbindung mit dem Smartphone 14 ebenfalls eine Sicherheit, da es beim Ausparken ebenfalls eine Nachricht bekommt, wenn ein Kraftfahrzeug 30 auf die Vorfahrt besteht.

Im Rahmen der Entwicklung von autonomen Fahrzeugen, Smart Cities und intelligenten Verkehrssystemen steht die Übermittlung von Daten in Echtzeit im Mittelpunkt. Die Daten der Fahrzeugsensoren sollen mit den Systemen anderer Fahrzeuge ausgetauscht werden und zwar in Echtzeit über die Cloud. Ziel ist es somit Gefahren, Staus und sonstige sicherheitsrelevante Informationen zu Verkehr und Mobilität schneller verarbeiten zu können. Dies soll dann eine höhere Sicherheit, einen besseren Verkehrsfluss sowie eine intelligentere Fahrweise des autonomen Fahrzeuges versprechen.

Fahrzeugaltbestände hemmen die Kommunikation zwischen voll-autonomen Fahrzeugen. Denn erst ab einer Beteiligung von 10 bis 15% aller Fahrzeuge an einem solchen Kommunikationssystem können die Funktionen sinnvoll arbeiten.

Nicht gesamtflottenkompatible Fahrzeuge können durch die beschriebene Verbindung mit einer Smartphone-App an den Datenaustausch der autonomen Fahrzeuge angebunden werden. Mittels einer Software oder App, die auf den Geräten des Kunden installiert wird, wird eine Echtzeit-Anbindung an die autonome Flotte gewährleistet. Der Großteil der Nutzer wird den neuen Mobilfunkstandard (5G) zuerst mit ihrem Smartphone nutzen, bevor es in der breiten Fahrzeugmasse Einsatz findet. Eine Anbindung über das Smartphone wird also die Fahrzeugflotte viel schneller auf den neuesten Mobilfunkstandard bringen.

Konkret braucht die Software aber Zugang zu Information des Kraftfahrzeuges 12. Eine Zugangserlaubnis muss über ein Softwareupdate des Steuergerätes (also der Steuereinrichtung 18) erteilt werden. Ähnlich wie beim Auslesen des Fehlerspeichers können nun Informationen lediglich mit dem freigeschalteten Smartphone und der App ausgelesen werden. Zugriff auf Daten von Lenkradwinkelsensor, Blinker, Brems- und Fahrpedalsensor (Pedalwertgeber) sowie Routeninformationen sind dabei interessant. Aufgrund von Datenschutzgründen sollen diese Informationen aber nicht gespeichert oder ausgesendet werden. Sie sollen als Momentaufnahmen in einen vom System abgeschotteten Ordner (also einem Zwischenspeicher) temporär abgelegt werden können. Die in der Cloud (in der Koordinierungseinrichtung 16) geteilte Information soll auf den Status "kommunizierfähiges Fahrzeug" begrenzt sein. Erst auf Abfrage durch ein als vertraulich eingestuftes autonomes Kraftfahrzeug 30, also bei erfülltem Freigabekriterium, sollen die Kraftfahrzeugdaten 22 generiert und weitergegeben werden.

Sowohl die Kommunikation als auch die Datenübertragung können dabei über die Cloud und mit dem 5GNetz realisiert werden. Alternativ ist auch eine Übertragung durch die Vehicle-to-Vehicle oder Car-to-Car Communication (V2V, C2C) als Funktelegramm denkbar. Wichtig ist dabei, dass sich das Kraftfahrzeug 30 in sinnvoller Nähe befindet. Die Abfrage muss also von einer legitimierten Interessensgruppe kommen. Außerdem soll nur ein Kraftfahrzeug 30 in einem autonomen Modus entsprechende Informationen abfragen können. Die Applikation kann also Informationen zur Route, Brems- und Lenkverhalten sowie Geschwindigkeit und Beschleunigung erhalten. Diese entstehen zum einen durch das Kraftfahrzeug 12 und zum anderen durch die Satellitennavigation des Smartphones.

Grundsätzlich sind somit alle Informationen, die durch die autonome Flotte an Kraftfahrzeugen 30 gesammelt werden, auch für die Besitzer von Altfahrzeuge darstellenden Kraftfahrzeugen 12 zugänglich. Erkennt ein Kraftfahrzeug 30 also Hindernisse in Form von Unfällen, Personen oder Wild auf der Straße, wird eine Warnung natürlich an die anderen autonomen Kraftfahrzeuge 30, aber auch an alle Besitzer der Smartphone-Applikation gesendet. Je nach Standort der Smartphones oder Kommunikationsadapter 14 werden somit relevante Informationen durch den Umkreis oder entlang einer Straße gefiltert.

Der Informationsfluss funktioniert in beide Richtungen, also von Kraftfahrzeugen 12 zu Kraftfahrzeugen 30 und umgekehrt.

Durch das Kommunikationssystem wird der Übergang zu einem vollautonomen Verkehr realisierbar und es wird eine grundlegende Vernetzung geschaffen. Darüber hinaus ist die erhöhte Verkehrssicherheit ein Vorteil.

Grundsätzlich werden bisherige Systeme in den Kraftfahrzeugen 12, 30, wie eine Bluetooth-Verbindung, und Kamerasysteme genutzt. Die Verbindung eines Kraftfahrzeuges 12 mit dem Smartphone ist bereits bekannt, für ein gutes Nutzungserlebnis muss parallel ein Ladevorgang des Smartphones realisierbar sein (induktiv oder als Verbindung per Kabel) um die hohe Nutzungsintensität zu realisieren.

Sowohl autonome Kraftfahrzeuge 30 als auch die Smartphone-Applikation bei Altfahrzeuge darstellenden Kraftfahrzeugen 12 können die benötigten Informationen über Satellitennavigation/Mobilfunkstandard (5G) verarbeiten und austauschen. Im Mittelpunkt steht in diesen Szenarien die Cloud, Rechenleistungen werden also hauptsächlich kraftfahrzeugextern ablaufen.

Die V2V oder C2C Kommunikation ist ebenfalls in Form einer standardisierten Nachricht über die Luftschnittstelle 36 im definierten Mikrowellenbereich möglich. Letzten Endes muss die Zuordnung der über die Kamera 38 erkannten Kraftfahrzeuge 12 mit den vorhanden GPS-Daten der Kraftfahrzeuge 12, 30 abgeglichen werden, um so sicherzustellen, dass das richtige Kraftfahrzeug 12, 30 abgefragt/benachrichtigt wird.

Insgesamt zeigen die Beispiele, wie durch die Erfindung eine Kommunikation zwischen Kraftfahrzeugen 30 einer autonomen Flotte und Altbestände darstellenden Kraftfahrzeugen 12 bereitgestellt werden kann.

## Patentansprüche

1. Fahrzeugfremder Kommunikationsadapter (14), der portabel und mittels einer Kommunikationsschnittstelle (20) mit einer Steuereinrichtung (18) eines Kraftfahrzeugs (12) reversibel koppelbar ist,
wobei der Kommunikationsadapter (14) dazu ausgebildet ist, mittels einer Luftschnittstelle (36) auf der Basis von Funkwellen, Infrarotwellen oder Mikrowellen eine Kommunikationsverbindung (34) zu zumindest einem weiteren, insbesondere autonomen, Kraftfahrzeug (30) und/oder einer fahrzeugexternen Koordinierungseinrichtung (16) zu betreiben,
wobei der Kommunikationsadapter (14) weiterhin dazu eingerichtet ist, von der Steuereinrichtung (18) ein Verkehrsverhalten und/oder eine Verkehrsumgebung des Kraftfahrzeugs (12) beschreibende Kraftfahrzeugdaten (22) zu empfangen, wobei der Kommunikationsadapter (14) eine Sende-Empfangseinheit (24) aufweist und dazu ausgelegt ist, mittels der Sende-Empfangseinheit (24) einerseits die Kraftfahrzeugdaten (22) an die fahrzeugexterne Koordinierungseinrichtung (16) zu übermitteln und andererseits über die Luftschnittstellen-basierte Kommunikationsverbindung von der fahrzeugexternen Koordinierungseinrichtung (16) erzeugte, ein Verkehrsverhalten und/oder eine Verkehrsumgebung zumindest eines anderen Kraftfahrzeugs (30) beschreibende Warndaten (32) zu empfangen und auf Grundlage der Warndaten (32) zumindest eine verkehrskoordinierende Maßnahme auszulösen, wobei die verkehrskoordinierende Maßnahme in einer Ausgabe eines Warnhinweises an einen Kraftfahrzeugführer besteht, **dadurch gekennzeichnet, dass**
der Kommunikationsadapter (14) dazu ausgelegt ist, die Kraftfahrzeugdaten (22) zunächst in einen vorbestimmten Zwischenspeicher zu schreiben und mittels der Sende-Empfangseinheit (24) in Abhängigkeit von einem Vorliegen eines erfüllten Freigabekriteriums an die fahrzeugexterne Koordinierungseinrichtung (16) zu übermitteln,
wobei eine Übermittlung bei nicht erfülltem Freigabekriterium nicht stattfindet und wobei das Freigabekriterium in einer erfolgreichen Authentifizierung und/oder einem erfolgreichen Identitätsnachweis eines die Kraftfahrzeugdaten anfragenden anderen Kraftfahrzeugs besteht.

2. Kommunikationsadapter (14) nach Anspruch 1, aufweisend eine Anzeigefläche zum optischen Anzeigen der durch die fahrzeugexterne Koordinierungseinrichtung (16) übermittelten Warndaten (32) als verkehrskoordinierende Maßnahme.

3. Kommunikationsadapter (14) nach Anspruch 1 oder 2, aufweisend eine akustische Ausgabeschnittstelle zum Aussenden von mit den Warndaten (32) korrespondierenden akustischen Warnsignalen als verkehrskoordinierende Maßnahme.

4. Kommunikationsadapter (14) nach einem der Ansprüche 1 bis 3, aufweisend eine Ladeschnittstelle zum elektrischen Anbinden an ein Bordspannungsnetz des Kraftfahrzeugs (12) zum elektrischen Aufladen eines elektrischen Speichers des Kommunikationsadapters (14).

5. Kommunikationssystem (10) mit einem Kraftfahrzeug (12), einem mittels einer Kommunikationsschnittstelle (20) mit einer Steuereinrichtung (18) des Kraftfahrzeugs (12) reversibel koppelbaren, fahrzeugfremden, portablen Kommunikationsadapter (14) gemäß einem der Ansprüche 1 bis 4 und einer fahrzeugexternen Koordinierungseinrichtung (16).

6. Kommunikationssystem (10) nach Anspruch 5, wobei der Kommunikationsadapter (14) dazu ausgebildet ist, mittels einer in dem Kommunikationsadapter (14) verbauten Empfangseinheit für ein Positionssignal eines Globalen Navigations-Satellitensystems, GNSS, Eigenpositionsdaten (26) betreffend seine aktuelle Position zu ermitteln und mittels der Sende-Empfangseinheit (24) an die fahrzeugexterne Koordinierungseinrichtung (16) zu übermitteln.

7. Verfahren zum Durchführen einer Kommunikation in einem Kommunikationssystem (10) nach einem der Ansprüche 5 oder 6, wobei das Kommunikationssystem (10) ein Kraftfahrzeug (12), einen mittels einer Kommunikationsschnittstelle (20) mit einer Steuereinrichtung (18) des Kraftfahrzeugs (12) reversibel koppelbaren, fahrzeugfremden, portablen Kommunikationsadapter (14) nach einem der Ansprüche 1 bis 4 und eine fahrzeugexterne Koordinierungseinrichtung (16) umfasst,
wobei der Kommunikationsadapter (14) von der Steuereinrichtung (18) ein Verkehrsverhalten und/oder eine Verkehrsumgebung des Kraftfahrzeugs (12) beschreibende Kraftfahrzeugdaten (22) empfängt, wobei der Kommunikationsadapter (14) eine Sende-Empfangseinheit (24) aufweist und mittels der Sende-Empfangseinheit (24) einerseits die Kraftfahrzeugdaten (22) an die fahrzeugexterne Koordinierungseinrichtung (16) übermittelt und andererseits von der fahrzeugexternen Koordinierungseinrichtung (16) erzeugte, ein Verkehrsverhalten und/oder eine Verkehrsumgebung zumindest eines anderen Kraftfahrzeugs (30) beschreibende Warndaten (32) empfängt und auf Grundlage der Warndaten (32) zumindest eine verkehrskoordinierende Maßnahme auslöst, wobei die verkehrskoordinierende Maßnahme in einer Ausgabe eines Warnhinweises an einen Kraftfahrzeugführer besteht,
**dadurch gekennzeichnet, dass**
der Kommunikationsadapter (14) die Kraftfahrzeugdaten (22) zunächst in einen vorbestimmten Zwischenspeicher schreibt und mittels der Sende-Empfangseinheit (24) in Abhängigkeit von einem Vorliegen eines erfüllten Freigabekriteriums an die fahrzeugexterne Koordinierungseinrichtung (16) übermittelt, wobei eine Übermittlung bei nicht erfülltem Freigabekriterium nicht stattfindet und wobei das Freigabekriterium in einer erfolgreichen Authentifizierung und/oder einem erfolgreichen Identitätsnachweis eines die Kraftfahrzeugdaten anfragenden anderen Kraftfahrzeugs besteht.

8. Speichermedium mit einem Programmcode, der dazu eingerichtet ist, bei Ausführen durch eine Prozessoreinrichtung eines mobilen Endgeräts ein Verfahren nach Anspruch 7 durchzuführen.

## Claims

1. Communication adapter (14) foreign to a vehicle, which is portable and which can be coupled reversibly by means of a communication interface (20) with a control apparatus (18) of a motor vehicle (12),
wherein the communication adapter (14) is designed to operate a communication connection (34), by means of an air interface (36) on the basis of radio waves, infrared waves or microwaves, to at least one further, in particular autonomous, motor vehicle (30) and/or a coordination device (16) external to the vehicle,
wherein the communication adapter (14) is furthermore configured to receive from the control apparatus (18) motor vehicle data (22) describing a traffic behaviour and/or a traffic environment of the motor vehicle (12), wherein the communication adapter (14) has a transceiver unit (24) and is designed, by means of the transceiver unit (24), on the one hand to transmit the motor vehicle data (22) to the coordination device (16) external to the vehicle and on the other hand to receive the warning data (32) generated via the air-interface-based communication connection by the coordination device (16) external to the vehicle and describing a traffic behaviour and/or a traffic environment of at least one other motor vehicle (30) and to trigger on the basis of the warning data (32) at least one traffic-coordinating measure, wherein the traffic-coordinating measure consists in an outputting of a warning to a driver of a motor vehicle,
**characterized in that**
the communication adapter (14) is designed to write the motor vehicle data (22) first in a predetermined cache and to transmit them by means of the transceiver unit (24) as a function of the presence of a fulfilled release criterion to the coordination device (16) external to the vehicle,
wherein if the release criterion is not fulfilled, no transmission takes place, and wherein the release criterion consists in a successful authentication and/or a successful proof of identity of another motor vehicle requesting the motor vehicle data.

2. Communication adapter (14) according to claim 1, having a display surface for the optical display of the warning data (32) transmitted by the coordination device (16) external to the vehicle, as a traffic-coordinating measure.

3. Communication adapter (14) according to claim 1 or 2, having an acoustic output interface for outputting acoustic warning signals corresponding to the warning data (32) as a traffic-coordinating measure.

4. Communication adapter (14) according to any of claims 1 to 3, having a charging interface for the electrical connection to an on-board power supply system of the motor vehicle (12) for the electrical charging of an electrical storage device of the communication adapter (14).

5. Communication system (10) having a motor vehicle (12), a portable communication adapter (14), which is foreign to the vehicle, and which can be reversibly coupled by means of the communication interface (20) with a control apparatus (18) of the motor vehicle (12), according to any of claims 1 to 4, and a coordination device (16) external to the vehicle.

6. Communication system (10) according to claim 5, wherein the communication adapter (14) is configured to determine intrinsic position data (26) concerning its current position by means of a receiving unit, installed in the communication adapter (14), for a position signal of a global navigation satellite system, GNSS, and to transmit these by means of the transceiver unit (24) to the coordination device (16) external to the vehicle.

7. Method for carrying out a communication in a communication system (10) according to any of claims 5 or 6, wherein the communication system (10) comprises a motor vehicle (12), a portable communication adapter (14), which is foreign to the vehicle, and which can be reversibly coupled by means of the communication interface (20) with a control apparatus (18) of the motor vehicle (12), according to any of claims 1 to 4, and a coordination device (16) external to the vehicle, wherein the communication adapter (14) receives from the control apparatus (18) motor vehicle data (22) describing a traffic behaviour and/or a traffic environment of the motor vehicle (12), wherein the communication adapter (14) has a transceiver unit (24) and on the one hand transmits by means of the transceiver unit (24) the motor vehicle data (22) to the coordination device (16) external to the vehicle, and on the other hand receives warning data (32) generated by the coordination device (16) external to the vehicle and describing a traffic behaviour and/or a traffic environment of at least one other motor vehicle (30), and on the basis of the warning data (32) triggers at least one traffic-coordinating measure, wherein the traffic-coordinating measure consists in and outputting of a warning to a motor vehicle driver, **characterised in that** the communication adapter (14) writes the motor vehicle data (22) first into a predetermined cache and, by means of the transceiver unit (24), as a function of the presence of a fulfilled release criterion, transmits them to the coordination device (16) external to the vehicle, wherein if a release criterion is not fulfilled, no transmission takes place, and wherein the release criterion consists in a successful authentication and/or a successful proof of identity of another motor vehicle requesting the motor vehicle data.

8. Storage medium having a program code which is configured to carry out a method according to claim 7 when it is executed by a processor apparatus of a mobile end device.

## Revendications

1. Adaptateur de communication (14) externe au véhicule qui peut être couplé de manière portable et réversible au moyen d'une interface de communication (20) à un appareil de commande (18) d'un véhicule automobile (12),
dans lequel l'adaptateur de communication (14) est réalisé afin de faire fonctionner au moyen d'une interface radio (36) sur la base d'ondes radio, d'ondes infrarouges ou de micro-ondes une liaison de communication (34) avec au moins un autre véhicule automobile (30) en particulier autonome et/ou un dispositif de coordination (16) externe au véhicule,
dans lequel l'adaptateur de communication (14) est en outre conçu afin de recevoir de l'appareil de commande (18) des données de véhicule automobile (22) décrivant un comportement de circulation et/ou un environnement de circulation du véhicule automobile (12), dans lequel l'adaptateur de communication (14) présente une unité d'émission-réception (24) et est configuré afin de transmettre au moyen de l'unité d'émission-réception (24) d'une part les données de véhicule automobile (22) au dispositif de coordination (16) externe au véhicule et de recevoir d'autre part par le biais de la liaison de communication basée sur l'interface radio des données d'avertissement (32) générées par le dispositif de coordination (16) externe au véhicule, décrivant un comportement de circulation et/ou un environnement de circulation au moins d'un autre véhicule automobile (30) et de déclencher sur la base des données d'avertissement (32) au moins une mesure coordonnant la circulation, dans lequel la mesure coordonnant la circulation consiste en une délivrance d'un avertissement à un conducteur de véhicule automobile,
**caractérisé en ce que**
l'adaptateur de communication (14) est configuré afin d'écrire les données de véhicule automobile (22) tout d'abord dans une mémoire intermédiaire prédéterminée et de les transmettre au moyen de l'unité d'émission-réception (24) en fonction d'une présence d'un critère de libération rempli au dispositif de coordination (16) externe au véhicule,
dans lequel une transmission n'a pas lieu en cas de critère de libération non rempli et dans lequel le critère de libération consiste en une authentification réussie et/ou une preuve d'identité réussie d'un autre véhicule automobile demandant les données de véhicule automobile.

2. Adaptateur de communication (14) selon la revendication 1, présentant une surface d'affichage pour l'affichage optique des données d'avertissement (32) transmises par le dispositif de coordination (16) externe au véhicule comme mesure coordonnant la circulation.

3. Adaptateur de communication (14) selon la revendication 1 ou 2, présentant une interface de délivrance acoustique pour l'émission de signaux d'avertissement acoustiques correspondant aux données d'avertissement (32) comme mesure coordonnant la circulation.

4. Adaptateur de communication (14) selon l'une quelconque des revendications 1 à 3, présentant une interface de charge pour la liaison électrique à un réseau de tension de bord du véhicule automobile (12) pour la charge électrique d'un accumulateur électrique de l'adaptateur de communication (14).

5. Système de communication (10) avec un véhicule automobile (12), un adaptateur de communication (14) portable, externe au véhicule, couplable de manière réversible au moyen d'une interface de communication (20) à un appareil de commande (18) du véhicule automobile (12) selon l'une quelconque des revendications 1 à 4 et un dispositif de coordination (16) externe au véhicule.

6. Système de communication (10) selon la revendication 5, dans lequel l'adaptateur de communication (14) est réalisé afin de déterminer au moyen d'une unité de réception montée dans l'adaptateur de communication (14) pour un signal de position d'un système de navigation globale par satellite, GPS, des données de position propre (26) concernant sa position actuelle et de les transmettre au moyen de l'unité d'émission-réception (24) au dispositif de coordination (16) externe au véhicule.

7. Procédé de réalisation d'une communication dans un système de communication (10) selon l'une quelconque des revendications 5 ou 6, dans lequel le système de communication (10) comporte un véhicule automobile (12), un adaptateur de communication (14) portable, externe au véhicule, couplable de manière réversible au moyen d'une interface de communication (20) à un appareil de commande (18) du véhicule automobile (12) selon l'une quelconque des revendications 1 à 4 et un dispositif de coordination (16) externe au véhicule, dans lequel l'adaptateur de communication (14) reçoit de l'appareil de commande (18) des données de véhicule automobile (22) décrivant un comportement de circulation et/ou un environnement de circulation du véhicule automobile (12), dans lequel l'adaptateur de communication (14) présente une unité d'émission-réception (24) et transmet au moyen de l'unité d'émission- réception (24) d'une part les données de véhicule automobile (22) au dispositif de coordination (16) externe au véhicule et reçoit d'autre part des données d'avertissement (32) décrivant un comportement de circulation et/ou un environnement de circulation au moins d'un autre véhicule automobile (30), générées par le dispositif de coordination (16) externe au véhicule et déclenche sur la base des données d'avertissement (32) au moins une mesure cordonnant la circulation, dans lequel la mesure coordonnant la circulation consiste en une délivrance d'un avertissement à un conducteur de véhicule automobile, **caractérisé en ce que** l'adaptateur de communication (14) écrit les données de véhicule automobile (22) tout d'abord dans une mémoire intermédiaire prédéterminée et les transmet au moyen de l'unité d'émission- réception (24) en fonction d'une présence d'un critère de libération rempli au dispositif de coordination (16) exerne au véhicule, dans lequel une transmission n'a pas lieu en cas de critère de libération non rempli et dans lequel le critère de libération consiste en une authentification résussie et/ou une preuve d'identité réussie d'un autre véhicule automobile demandant les données de véhicule automobile.

8. Support de stockage avec un code de programme qui est conçu afin de réaliser lors de la réalisation par un dispositif processeur d'un terminal mobile un procédé selon la revendication 7.
